(19) Europäisches Patentamt
European Patent Office
Office européen des brevets

(11) **EP 1 720 757 B1**

(12) **EUROPÄISCHE PATENTSCHRIFT**

(45) Veröffentlichungstag und Bekanntmachung des Hinweises auf die Patenterteilung:
**08.09.2010   Patentblatt 2010/36**

(21) Anmeldenummer: **05716812.2**

(22) Anmeldetag: **25.02.2005**

(51) Int Cl.:
**B62D 15/02** (2006.01)

(86) Internationale Anmeldenummer:
**PCT/EP2005/050821**

(87) Internationale Veröffentlichungsnummer:
**WO 2005/085043 (15.09.2005 Gazette 2005/37)**

(54) **EINPARKHILFE**

PARKING AID

DISPOSITIF D'AIDE AU STATIONNEMENT

(84) Benannte Vertragsstaaten:
**DE FR**

(30) Priorität: **05.03.2004   DE 102004011408**
**16.02.2005   DE 102005006966**

(43) Veröffentlichungstag der Anmeldung:
**15.11.2006   Patentblatt 2006/46**

(73) Patentinhaber: **Continental Teves AG & Co. oHG**
**60488 Frankfurt (DE)**

(72) Erfinder: **LÜKE, Stefan**
**57462 Olpe (DE)**

(56) Entgegenhaltungen:
**EP-A- 1 170 171      WO-A-03/055734**
**DE-A1- 19 940 007     FR-A- 2 785 383**

• **PATENT ABSTRACTS OF JAPAN Bd. 2003, Nr. 12, 5. Dezember 2003 (2003-12-05) & JP 2003 276541 A (MITSUBISHI MOTORS CORP), 2. Oktober 2003 (2003-10-02)**

**Beschreibung**

Die Erfindung betrifft ein Verfahren zum Einparken für ein Fahrzeug.

Bekannte Einparkhilfen arbeiten mit einer Planung einer Bahn für den Einparkvorgang auf Grundlage von abgespeicherten Datensätzen für verschiedene Parklückenlängen. Diese Verfahren sind sehr speicherintensiv.

DE19940007 A1 ist der nächstliegende Stand der Technik. Es offenbart ein Verfahren gemäß dem Oberbegriff des Anspruchs 1.

Darüber hinaus sind Einparkvorgänge mittels Bahnplanungen auf Grundlage von vorgegebenen geometrischen Formel, wie Kreis, Klothoidenbahn oder Gerade möglich. DiesePlanungen sind relativ rechenintensiv und führen in der Regel zu unkomfortablen Einparkbahnen.

Aufgabe der Erfindung ist es, eine Einparkhilfe zu schaffen, die ein stoßfreies Lenken ermöglicht.

Die Aufgabe wird durch die Merkmale der unabhängigen Patentansprüche gelöst. Bevorzugte Ausgestaltungen sind in den Unteransprüchen angegeben.

Die Aufgabe wird durch ein Verfahren für das Einparken eines Fahrzeugs gelöst, wobei die Bahn für das Einparken des Fahrzeugs in eine Einfahrbahn im Bereich einer Parklücke und eine vor der Einfahrbahn liegende Anfahrbahn aufgeteilt wird und die Einfahrbahn aus einem Kreisbogen und die vor der Einfahrbahn liegende Anfahrbahn aus einem Polynom fünfter Ordnung gebildet wird.

Bei einer Ausführungsform nach der Erfindung werden dem Fahrer komfortable Handlungsanweisungen durch haptische Rückmeldungen gegeben. Dabei bleibt sichergestellt, dass der Fahrer während des Einparkvorganges diese Handlungsanweisungen umsetzt oder bewusst überstimmt.

Bei einer alternativen Ausführungsform nach der Erfindung wird das Fahrzeug automatisch auf einer bestimmten Bahn in eine Parklücke gelenkt.

Nach der Erfindung wird so eine Aufteilung der Bahnplanung in eine sichere Einfahrbahn im kritischen Parklückenbereich und eine komfortable Anfahrbahn vorgenommen.

Eine Verringerung des Berechnungsaufwandes kann nach der Erfindung dabei durch Strecken einer für die minimale Parklücke berechneten Bahn erzielt werden.

Es ist nach der Erfindung vorgesehen, dass zumindest ein Teilbereich der Anfahrbahn auf Grundlage eines oder mehrerer Polynome, vorzugsweise 2 bis 4 Polynome, ermittelt wird.

Es ist nach der Erfindung vorgesehen, dass ein Ansatzpunkt der auf Grundlage zumindest eines Polynom ermittelten Anfahrbahn an die Einfahrfahrbahn in Abhängigkeit von der Position des einzuparkenden Fahrzeugs ermittelt wird.

Es ist nach der Erfindung vorgesehen, dass ein Ansatzpunkt der auf Grundlage zumindest eines Polynome ermittelten Anfahrbahn ermittelt wird, der auf der Bahn für das Einparken des Fahrzeugs je nach Fahrzeugstartposition an einer Kreisbahn oder einer davor liegenden Klothoidenbahn liegt.

Es ist nach der Erfindung vorgesehen, dass die Einfahrbahn aus einem Kreisbogen gebildet wird.

Es ist nach der Erfindung vorgesehen, dass der normalerweise ein Passieren der Ecken ermöglichende Kreisbogen verkürzt ist, wobei die Kreisbogenlänge so gewählt wird, damit die vordere rechte Ecke eines rückwärts einzuparkenden Fahrzeugs gerade die hintere linke Ecke eines die Parklücke nach vorne begrenzendenden Objekts passiert.

Der Ansatzpunkt an die an die Einfahrbahn wird für weit von der Parklücke entfernte und im flachen Winkel zur Parklücke stehende einzuparkende Fahrzeuge so vorzugsweise in der Nähe des Umlenkpunktes gewählt, weil eine gestreckte Anfahrbahn einen direkten Weg und nur ein geringes Einfahren in die Gegenfahrbahn mit sich bringt.

Der Ansatzpunkt an die an die Einfahrbahn wird so dagegen für nahe an der Parklücke oder im steilen Winkel zur Einfahrbahn stehende einzuparkende Fahrzeuge spät an die Klothoidenbahn oder direkt an der Kreisbahn angesetzt, um einen möglichst großen Startbereich für den Einparkvorgang zu erhalten und um unnötige Lenkvorgänge zu vermeiden.

Der Ansatzpunkt kann für die Fälle, die zwischen den beiden zuvor genannten Bedingungen liegen, in diskreten Schritten oder kontinuierlich auf der Klothoidenbahn gewählt werden, wobei die Kreisbogenlänge so gewählt wird, dass die vordere rechte Ecke eines rückwärts einzuparkenden Fahrzeugs gerade die hintere linke Ecke eines die Parklücke nach vorne begrenzendenden Objekts passiert.

Es ist nach der Erfindung vorgesehen, dass an den Kreisbogen vor dem Umlenkpunkt (in Richtung der Einfahrfahrbahn) zumindest ein Klothoidenbogen an den Kreis angefügt wird, der eine Auslenkung in die Gegenfahrbahn verringert.

Es ist nach der Erfindung vorgesehen, dass die Bahn für die kleinstmögliche Parklücke an die reale Parklücke durch Strecken angepasst wird.

Dabei ist es vorzugsweise die Bahnplanung für ein rückwärts Einparken vorgesehen, welche nach Maßgabe von Daten über den Parkraum relativ zum Fahrzeug und den Weg des Fahrzeugs in die Parklücke erfolgt.

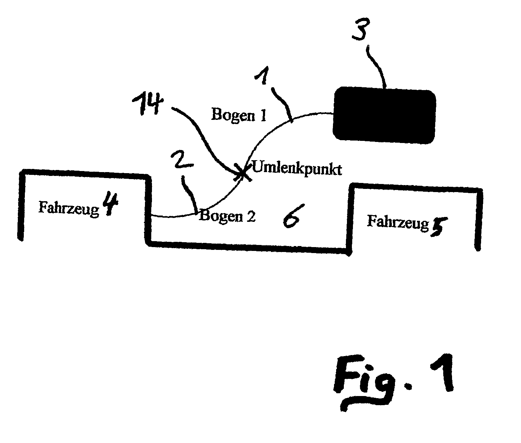

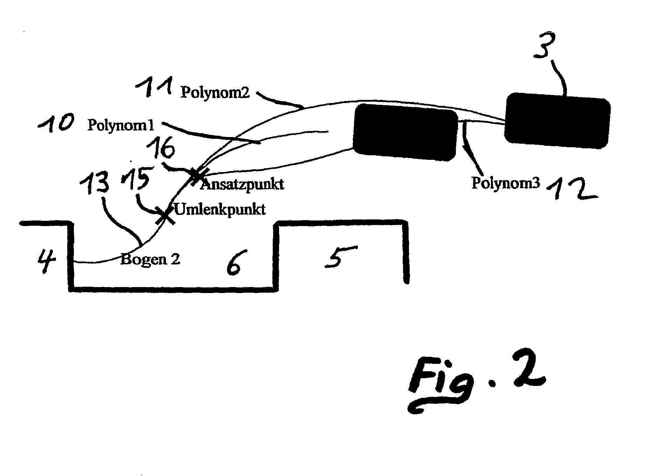

Die Erfindung wird anhand von zwei Abbildungen (Fig. 1 und Fig. 2) im folgenden beispielhaft näher erläutert.

Die Fig. 1 zeigt den bekannten Bahnverlauf eines Einparkvorgangs als Hintereinanderreihung von zwei Kreisbögen.

Die Fig. 2 zeigt den Bahnverlauf eines Einparkvorgangs nach der Erfindung durch eine Hintereinanderreihung von einem Kreisbogen und einem Verlauf nach einem Polynom.

Die in Fig. 1 dargestellte Aneinanderreihung von zwei Kreisbögen 1,2 um einen Umlenkpunkt 14 ermöglicht das Einfahren des Fahrzeugs 3 in eine kleinste Parklücken 6 zwischen einem Fahrzeug 4 und einem Fahrzeug 5.

Diese Bahn erfordert aber das Anhalten des Fahrzeugs 3 im Umlenkpunkt 14. Zudem werden Lenkung und Fahrzeug stark belastet.

Nach der Erfindung werden verschiedene mögliche Bahnverläufe beim Einparkvorgang im Hinblick auf unterschiedliche Faktoren bewertet. Es werden insbesondere Bahnverläufe berücksichtigt, die ein kurze Länge der kleinstmöglichen Parklücke, ein geringes Einfahren des Vorderwagens in die Gegenfahrbahn, eine geringe notwendige Lenkwinkeländerung, einen geringen maximal erforderlichen Lenkwinkel und einen geringen Berechnungsaufwand für eine Fahrbahn erfordern.

Unter Berücksichtigung der genannten Faktoren ist eine Kombination eines Kreisbogens nach dem Umlenkpunkt und das Einfügen einer Doppel-Klothoidenbahn nach der Erfindung eine Verbesserung der Bahn. Damit wird eine stetiger Verlauf des Lenkwinkels ermöglicht. Zusätzlich kann am Anfang des Kreisbogens 1 (siehe Fig. 1) in Richtung des einfahrenden Fahrzeugs 3 noch ein Klothoidenbogen eingefügt werden, um die Krümmung der Bahn am Endpunkt an den Gierwinkel des Fahrzeugs anzupassen.

Diese Lösung verbindet eine begrenzte Lenkwinkeländerung mit einem unter diesen Umständen minimalen Einfahren in die Gegenfahrbahn und das Erreichen minimaler Parklücken. Zudem verlangt sie einen geringen Berechnungsaufwand, da die Bahn nicht auf Kollision überprüft werden muss.

Eine für den Fahrer nochmals angenehmere Lenkwinkeländerung wird nach der Erfindung über die Berechnung der Bahn durch ein Polynom fünfter Ordnung erzielt:

$$y = f(x) = a_0 x^0 + a_1 x^1 + a_2 x^2 + a_3 x^3 + a_4 x^4 + a_5 x^5 \qquad \textbf{(1)}$$

wobei die einzelnen Koeffizienten aus den folgenden Nebenbedingungen bestimmt werden:

$$\textbf{(2)}$$
$$f(x_0)\big|_{Kreisbogen} = y_0$$
$$f(x_0)'\big|_{Kreisbogen} = \frac{dy}{dx}\bigg|_{Kreisbogen}$$
$$f(x_0)''\big|_{Kreisbogen} = \frac{d^2 y}{dx^2}\bigg|_{Kreisbogen}$$
$$f(x_1)\big|_{Fahrzeug} = y_1$$
$$f(x_1)'\big|_{Fahrzeug} = \frac{dy}{dx}\bigg|_{Fahrzeug}$$
$$f(x_1)''\big|_{Fahrzeug} = \frac{d^2 y}{dx^2}\bigg|_{Fahrzeug}$$

Diese Nebenbedingungen sind so gewählt, dass an den Übergängen stoßfreies Lenken möglich ist.

Wird das Polynom zur Berechnung der kompletten Parklücke verwendet, ist allerdings nicht immer sichergestellt, dass das einzuparkende Fahrzeug an der vorderen Ecke von Fahrzeug 5 kollisionsfrei vorbeifährt.

Unter Berücksichtigung der genannten Faktoren ist insbesondere die in Fig. 2 dargestellte Lösung mit einer Kombination eines Kreisbogens 13 nach dem Umlenkpunkt 15, der eine sichere Einfahrt des Fahrzeugs 3 in die Parklücke 6 zwischen zwei Fahrzeugen 4,5 ermöglicht und ein Führen des Fahrzeugs auf diesen Bogen 13 hin durch ein Polynom, das an einem Ansatzpunkt, wie z.B. Ansatzpunkt 16, an den Kreisbogen gereiht werden.

Es besteht keine Gefahr, dass das Fahrzeug in der Parklücke 6 anschlägt, wenn es der Bahn folgt.

Steht das Fahrzeug sehr weit von der Parklücke entfernt, könnte ein Polynom aber immer noch sehr weit in die Gegenfahrbahn führen oder zu einer Bahn führen, die einen seitlichen Anschlag in die Fahrzeugfront erzwingt.

Ist das Fahrzeug sehr weit an der Parklücke vorbeigefahren, besteht die Gefahr; dass ein Polynom berechnet wird, das sehr weit in die Gegenfahrbahn reicht. Dann ist es erfindungsgemäß vorgesehen, einen Klothoidenbogen an den Kreisbogen anzufügen, der eine solche Auslenkung verringert.

Der Ansatzpunkt des Polynoms auf die anschlagsichere Parktrajektorie (Bahnverlauf) erfolgt in diesem Fall in Abhängigkeit vom Standpunkt des Fahrzeugs 3, spätestens aber am Kreisbogen 13 am Umlenkpunkt 15 und es ergeben sich je nach Bahnen wie 10,11 oder 12.

Bei einer alternativen Möglichkeit, um ein zu großes Einfahren in die Gegenfahrbahn bei weit entfernten Parklücken zu vermeiden, ist die Verkürzung des Kreisbogens vorgesehen. Die Kreisbogenlänge ist dabei so gewählt, dass die vordere rechte Ecke des einzuparkenden Fahrzeugs 3 gerade die hintere linke Ecke von Fahrzeug 5 passiert. Diese Lösung hat den Vorteil, das die Lenkbewegung deutlich komfortabler wird. Sie erfordert jedoch eine Überprüfung der Randbedingungen, ob die geplante Bahn befahrbar ist und ggf. eine Neuplanung bei weniger verkürztem Kreisbogen.

Um den Berechnungsaufwand gering zu halten, bestimmt das Verfahren nur das Polynom relativ zwischen Fahrzeug 3 und Ansatzpunkt 13 am Kreisbogen. Der Kreisbogen wird dazu nur für die kleinstmögliche Parklücke abgespeichert. Die Kreisbogenlänge ist dabei so gewählt, dass die vordere rechte Ecke des einzuparkenden Fahrzeugs 3 gerade die hintere linke Ecke von Fahrzeug 5 passiert. Dieses Verfahren hat den Vorteil, das eine Überprüfung der Randbedingungen, ob die geplante Bahn befahrbar ist, deutlich vereinfacht wird.

Dabei wird nach der Erfindung geprüft, ob die rechten Ecken des einzuparkenden Fahrzeugs 3 mit Fahrzeug 5 kollidieren, ob die linken Ecken des einzuparkenden Fahrzeugs 3 in die Gegenfahrbahn kommen, ob der maximale Lenkwinkel nicht überschritten wird und ob die maximale Lenkwinkelgeschwindigkeit nicht überschritten wird.

Diese Überprüfungen werden je nach verfügbarer Hardware und Rechenleistung in dem Fahrzeug entweder näherungsweise mit einfachen mathematischen Grundoperationen unter Hinzufügen von Sicherheitsabständen durchgeführt, oder unter Hinzunahme trigonometrischer Funktionen exakt durchgeführt, oder aber durch Auswerten eines Kennfeldes ermittelt.

Da nur die durch das Polynom beschriebene Bahn getestet werden muss, können bestimmte Operationen (z.B. Bestimmen der ersten und zweiten Ableitung) bereits im Vorfeld symbolisch gelöst werden.

Bei der Ermittlung der Befahrbarkeit durch Auswerten eines Kennfeldes werden als Eingangsdaten Fahrzeugposition, Fahrzeuggierwinkel und Fahrzeuglenkwinkel bezogen auf die minimal mögliche Parklücke genommen. Mit diesen vier Eingängen kann aus dem Kennfeld bestimmt werden, ob ein sicheres Einparken möglich ist. Das Kennfeld wird vorher (offline) berechnet und liegt fest im Steuergerät in einem Speicher vor. Aufgrund einer Skalierbarkeit werden die so gewonnenen Aussagen für beliebig große Parklücken verwendet.

Um den Berechnungsaufwand weiter gering zu halten, bestimmt das Verfahren nur das Polynom relativ zwischen Fahrzeug und Ansatzpunkt an der festen Einfahrtrajektorie (Einfahrbahn). Diese wird dazu nur für die kleinstmögliche Parklücke abgespeichert.

Liegt eine größere Parklücke vor als die minimal mögliche, so wird ein Skalierungsfaktor in y-Richtung bezogen auf die kleinstmögliche Parklücke bestimmt. Dies geschieht so, dass der minimale Abstand zwischen der vorderen rechten Ecke des einzuparkenden Fahrzeugs 3 und der linken hinteren Ecke von Fahrzeug 5 immer konstant ist.

Anschließend wird der fest abgelegte Standardkreisbogen mit diesem Faktor in y-Richtung skaliert und mit dem Fahrzeug über ein Polynom verbunden.

So wird der maximale Lenkwinkel und die Lenkwinkeländerung verringert, gleichzeitig bleibt die Sicherheit, dass das Fahrzeug beim Abfahren der Bahn nicht anschlägt.

## Patentansprüche

1. Verfahren zum Einparken eines Fahrzeuges, das ein autonomes Fahren oder Lenken des Fahrzeugs auf einer Bahn für ein Einparken ermöglicht oder einen Fahrer des Fahrzeugs bei einem Einparkvorgang auf der Bahn für das Einparken des Fahrzeugs mittels eines auf das Lenkrad aufgebrachten Lenkmoments unterstützt, wobei der Fahrer durch mindestens einen künstlichen Lonkanschlag, vorzugsweise ein oder zwei künstliche Lenkanschläge, auf der Bahn für das Einparken des Fahrzeugs geführt wird, wobei die Bahn für das Einparken des Fahrzeugs in eine Einfahrbahn im Bereich einer Parklücke und eine vor der Einfahrbahn liegende Anfahrbahn aufgeteilt wird,
dadurch gekennzeichnet, dass
die Einfahrbahn aus einem Kreisbogen und die vor der Einfahrbahn liegende Antahrbahn aus einem Polynom fünfter Ordnung gebildet wird, dessen Koeffizienten durch Nebenbedingungen bestimmt werden, die so gewählt sind, dass an den Übergängen stoßfreies Lenken ermöglicht wird und ein stetiger Verlauf einer Lenkwinkeländerung erzielt wird.

2. Verfahren nach Anspruch 1,
dadurch gekennzeichnet,
dass für die Bahn eine kurze Länge der kleinstmöglichen Parklücke und ein geringes Einfahren des Fahrzeuges in die Gegenfahrbahn berücksichtigt werden.

**3.** Verfahren nach einem der Ansprüche 1 bis 2,
**dadurch gekennzeichnet,**
**dass** ein Ansatzpunkt der auf Grundlage zumindest eines Polynom ermittelten Anfahrbahn an die Einfahrfahrbahn in Abhängigkeit von der Position des einzuparkenden Fahrzeugs ermittelt wird.

**4.** Verfahren nach einem der Ansprüche 1 bis 3,
**dadurch gekennzeichnet,**
**dass** ein Ansatzpunkt der auf Grundlage zumindest eines Polynom ermittelten Anfahrbahn ermittelt wird, der auf der Bahn für das Einparken des Fahrzeugs je nach Fahrzougstartposition an einer Kreisbahn oder einer davor liegenden Klothoidenbahn liegt.

**5.** Verfahren nach einem der vorangegangenen Ansprüche,
**dadurch gekennzeichnet,**
**dass** der normalerweise ein Passieren der Ecken ermöglichende Kreisbogen verkürzt ist, wobei die Kreisbogenlänge so gewählt wird, damit die vordere rechte Ecke eines rückwärts einzuparkenden Fahrzeugs gerade die hintere linke Ecke eines die Parklücke nach vorne begrenzendenden Objekts passiert

**6.** Verfahren nach einem der vorangegangenen Ansprüche,
**dadurch gekennzeichnet,**
**dass** an den Kreisbogen vor dem Umlenkpunkt (in Richtung der Einfahrfahrbahn) zumindest ein Klothoidenbogen an den Kreis angefügt wird, der eine Auslenkung in die Gegenfahrbahn verringert.

**7.** Verfahren nach einem der Ansprüche 1 bis 6,
**dadurch gekennzeichnet,**
**dass** die Bahn für die kleinstmögliche Parklücke an die reale Parklücke durch Strecken angepasst wird.

**8.** Verfahren nach einem der Ansprüche 1 bis 7,
**dadurch gekennzeichnet,**
**dass** eine Bahnplanung für ein rückwärts Einparken vorgesehen ist, welche nach Maßgabe von Daten über den Parkraum relativ zum Fahrzeug und den Weg des Fahrzeugs in die Parklücke erfolgt.

**Claims**

**1.** Method for parking a vehicle, which permits autonomous driving or steering of the vehicle on a path for parking or assists a driver of the vehicle during a parking manoeuvre on the path for the parking of the vehicle by means of a steering torque which is applied to the steering wheel, wherein the driver is guided on the path for parking the vehicle by at least one artificial steering lock, preferably one or two artificial steering locks, wherein the path for parking the vehicle is divided into a path for driving in in the region of a parking space and a starting path located before the driving in path,
**characterized**
**in that** the driving in path is formed from an arc and the starting path which is located before the driving in path is formed from a fifth order polynomial, the coefficients of which are determined by secondary conditions which are selected such that jolt-free steering is made possible at the transitions and a continuous profile of a change in steering angle is achieved.

**2.** Method according to Claim 1,
**characterized**
**in that** a short length of the smallest possible parking space and a small amount of driving the vehicle into the opposing carriageway are taken into account for the path.

**3.** Method according to one of Claims 1 to 2,
**characterized**
**in that** a starting point of the starting path, which is determined on the basis of at least one polynomial, to the driving in path is determined as a function of the position of the vehicle which is to be parked.

**4.** Method according to one of Claims 1 to 3,
**characterized**

**in that** a starting point of the starting path which is determined on the basis of at least one polynomial and which is located on the path for parking the vehicle is located on a circular path or a clotoidal path located before it, depending on the starting position of the vehicle.

**5.** Method according to one of the preceding claims,
**characterized**
**in that** the arc which normally permits the corners to be passed is shortened, wherein the arc length is selected such that the front right-hand corner of a vehicle which is parking in reverse just passes the rear left-hand corner of an object which limits the parking space in the forward direction.

**6.** Method according to one of the preceding claims,
**characterized**
**in that** at least one clotoidal arc is added to the arc before the deflection point (in the direction of the driving in path) to the circle which reduces deflection into the opposing carriageway.

**7.** Method according to one of Claims 1 to 6,
**characterized**
**in that** the path for the smallest possible parking space is adapted to the real parking space by extension.

**8.** Method according to one of Claims 1 to 7,
**characterized**
**in that** path planning is provided for parking in reverse, which path planning takes place in accordance with data relating to the parking space relative to the vehicle and the travel of the vehicle into the parking space.

**Revendications**

**1.** Procédé de mise en stationnement d'un véhicule qui permet un déplacement ou un guidage autonome du véhicule sur une voie pour une mise en stationnement ou qui assiste un conducteur du véhicule lors d'une manoeuvre de mise en stationnement sur la voie pour la mise en stationnement du véhicule au moyen d'un couple de direction appliqué au volant, le conducteur étant guidé par au moins une butée de direction artificielle, de préférence une ou deux butées de direction artificielles, sur la voie pour la mise en stationnement du véhicule, la voie pour la mise en stationnement du véhicule étant divisée en une voie d'entrée dans la zone d'une place de stationnement et une voie d'arrivage qui se trouve devant la voie d'entrée, **caractérisé en ce que** la voie d'entrée est formée d'un arc de cercle et la voie d'arrivage qui se trouve devant la voie d'entrée d'un polynôme du cinquième ordre dont les coefficients sont déterminés par des conditions annexes qui sont choisies de telle sorte qu'un guidage sans à-coup est possible au niveau des transitions et de manière à obtenir un déroulement constant d'un changement d'angle de direction.

**2.** Procédé selon la revendication 1, **caractérisé en ce qu'**une longueur courte de la plus petite place de stationnement possible et une entrée minime du véhicule dans la voie en sens inverse sont prises en compte pour la voie.

**3.** Procédé selon l'une des revendications 1 à 2, **caractérisé en ce qu'**un point de repère de la voie d'arrivage déterminée en se basant sur au moins un polynôme est déterminé sur la voie d'entrée en fonction de la position du véhicule à mettre en stationnement.

**4.** Procédé selon l'une des revendications 1 à 3, **caractérisé en ce qu'**un point de repère de la voie d'arrivage déterminée en se basant sur au moins un polynôme et qui se trouve, suivant la position de départ du véhicule, sur la voie de mise en stationnement du véhicule se trouve sur une voie circulaire ou sur une voie en clothoïde qui se trouve devant celle-ci.

**5.** Procédé selon l'une des revendications précédentes, **caractérisé en ce que** l'arc de cercle qui permet normalement le passage des coins est raccourci, la longueur de l'arc de cercle étant choisie de telle sorte que le coin avant droit d'un véhicule à mettre en stationnement en marche arrière passe tout juste le coin arrière gauche d'un objet qui limite la place de stationnement vers l'avant.

**6.** Procédé selon l'une des revendications précédentes, **caractérisé en ce qu'**au moins un arc de clothoïde est ajouté au cercle sur l'arc de cercle avant le point d'inversion (en direction de la voie d'entrée), lequel réduit un écart dans la voie en sens inverse.

7. Procédé selon l'une des revendications 1 à 6, **caractérisé en ce que** la voie pour la place de stationnement la plus petite possible est adaptée à l'espace de stationnement réel par étirement.

8. Procédé selon l'une des revendications 1 à 7, **caractérisé en ce qu'**il est prévu un projet de voie pour une mise en stationnement en marche arrière, lequel s'effectue d'après les données sur l'espace de stationnement par rapport au véhicule et à la trajectoire du véhicule dans la place de stationnement.

**Fig. 1**

Fig.2

## EP 1 720 757 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* DE 19940007 A1